# EUROPÄISCHE PATENTSCHRIFT

(11) **EP 4 087 184 B1**
(45) Veröffentlichungstag und Bekanntmachung des Hinweises auf die Patenterteilung: **24.05.2023**
(21) Anmeldenummer: 22171481.9
(22) Anmeldetag: 03.05.2022
(51) Int. Cl.: H04L 9/40, G06F 21/32, G06F 21/60, G06F 21/31, G06F 21/55, G06F 21/62

(54) **VERFAHREN ZUR VON EINER SYSTEMZEIT UNABHÄNGIGEN AUTHENTIFIZIERUNG VON INTERAKTIONEN SOWIE VORRICHTUNG ZUR DURCHFÜHRUNG DIESES VERFAHRENS UND FLAMMENWÄCHTER MIT EINER DERARTIGEN VORRICHTUNG**
METHOD FOR AUTHENTICATING INTERACTIONS INDEPENDENT OF A SYSTEM TIME, AND DEVICE FOR CARRYING OUT THIS METHOD AND FLAME MONITOR COMPRISING SUCH A DEVICE
PROCÉDÉ D'AUTHENTIFICATION DES INTERACTIONS INDÉPENDAMMENT D'UNE HEURE SYSTÈME , AINSI QUE DISPOSITIF DE MISE EN UVRE DUDIT PROCÉDÉ ET DÉTECTEUR DE FLAMME DOTÉ D'UN TEL DISPOSITIF

(30) Priorität: 07.05.2021 DE 102021112041
(43) Veröffentlichungstag der Anmeldung: 09.11.2022
(73) Patentinhaber: Embex GmbH, 79100 Freiburg (DE)
(72) Erfinder: Miething, Lorenz, 79110 Freiburg (DE); Fey, Lukas, 79312 Emmendingen (DE); Nöller, Fabian, 79312 Emmendingen (DE)
(74) Vertreter: Westphal, Mussgnug & Partner Patentanwälte mbB

(56) Entgegenhaltungen:
- WO-A2-2009/025905
- DE-A1-102019 106 528
- US-A1- 2020 244 659

## Beschreibung

Die Erfindung betrifft ein Verfahren zur von einer Systemzeit unabhängigen Authentifizierung von Interaktionen in Mikrocontroller- und/oder FPGA (englisch: Field Programmable Gate Array; deutsch: im Feld (also vor Ort, beim Kunden) programmierbare (Logik-)Gatter-Anordnung)-basierenden Geräten oder Vorrichtungen, insbesondere in eingebetteten (engl.: "embedded") Systemen, sowie eine Vorrichtung zur Durchführung dieses Verfahrens und einen Flammenwächter mit einer derartigen Vorrichtung.

Bei Interaktionen von miteinander kommunizierenden Geräten wird regelmäßig aus Sicherheitsgründen eine Authentisierung benötigt, um einem anfragenden Gerät Zugriff zu gewähren und beispielsweise entsprechende Berechtigungen auf einem beglaubigenden Gerät zu erteilen. Eine Authentisierung, also die Anfrage einer Anmeldung mit der Behauptung einer Identität, mit anschließender Authentifizierung, d.h. einer Überprüfung und Validierung der Behauptung der erhaltenen Identität, trägt maßgeblich zur Absicherung eines digitalen Zugangs bei.

Die Authentisierung stellt also den Nachweis einer Entität dar, dass diese tatsächlich diejenige ist, die sie vorgibt zu sein. Mittels dieses Nachweises soll die Identität bestätigt bzw. geprüft werden können. Im Falle einer sogenannten Zwei-Faktor-Authentisierung oder häufig auch als Zwei-Faktor-Authentifizierung (kurz "2FA" bezeichnet), wird die Sicherheit des jeweiligen digitalen Zugangs um einen weiteren Faktor erhöht. "2FA" bezeichnet damit den Identitätsnachweis eines Nutzers mittels der Kombination zweier unterschiedlicher und insbesondere unabhängiger Authentisierungs-Komponenten bzw. Faktoren. Typische Beispiele sind Bankkarte plus PIN beim Geldautomaten, Fingerabdruck plus Zugangscode in Gebäuden, oder Passwort und Transaktionsnummer (TAN) beim Online-Banking. Sofern der Zugang zu einem System nicht durch andere Maßnahmen geregelt und limitiert werden kann, sollte aus Sicherheitsgründen immer eine 2FA angewendet werden.

Im IT-Umfeld sind diese beiden Methoden bereits seit Jahren etabliert. Im Embedded-Umfeld jedoch ist auch aktuell häufig nur die Abfrage eines einzelnen gemeinsamen Geheimnisses (z.B. Passwort) die einzige Absicherung für den Zugriff auf ein System. Durch die immer komplexer werdenden industriellen Systeme und die nahtlose Anbindung an bestehende IT-Systeme, muss auch im Embedded-Umfeld diesbezüglich nachgebessert und angepasst werden.

Bei dieser Anpassung sollten gängige und etablierte Prozesse und Algorithmen, welche im IT-Umfeld bereits etabliert sind, angewendet werden, um einheitlich und kompatibel zu anderen Bereichen zu sein. Dies ist im Embedded-Umfeld aber nicht immer möglich, da z.B. nicht ausreichend Ressourcen zur Verfügung stehen, oder aber die, in beispielsweise der IT üblichen, Ausgangssituationen sich zu stark von denen im Embedded-Umfeld unterscheiden. Entsprechend sind Adaptionen dieser Prozesse notwendig, um bei einer Verbindung von IT und OT die Cyber Security zu gewährleisten.

Im Gegensatz zu herkömmlichen Prozessoren, die in Destop-Computern, Servern, Smartphones oder Tablets verbaut werden, geht es bei der vorliegenden Erfindung um eingebettete Systeme, die ganz gezielt zur Messung und Erfassung von Daten dienen bzw. zur Steuerung von anderen Komponenten oder Systemen.

Als "Embedded System" (deutsch: "eingebettetes System") versteht man dabei ein Microcontrollersystem oder ein FPGA-System, das eine fest zugeordnete Aufgabe erfüllt, in ein umgebendes System eingebettet bzw. integriert ist und mit diesem bzw. durch dieses System interagiert. Es dient dabei insbesondere der Messung, Erfassung und Weiterleitung von Daten bzw. wird es zur Steuerung von Aktoren, Komponenten oder Systemen eingesetzt.

Diese eingebetteten Systeme, also Microcontroller- oder FPGA-basierenden Geräte und Einrichtungen, haben oftmals, verglichen mit ihren leistungsstarken Gegenstücken aus dem IT-Umfeld, weniger Rechenressourcen und noch häufiger eine nur sehr begrenzte Stromversorgung. Das Umfeld, in denen diese Tätigkeiten durchgeführt werden, ist oftmals weit entfernt von den idealen Betriebsbedingungen für elektronische Komponenten und wird "Embedded"-Umfeld genannt.

Nimmt man das Beispiel eines Sensors zur Durchflussmessung, wird dieser z.B. an Gas-Pipelines in extrem rauen Umgebungen und unter sehr schwierigen Betriebsbedingungen verwendet. Dies kann beispielsweise eine Mindesttemperatur von -30°C oder eine Maximaltemperatur von +100°C sein. Zur Regelung des Durchflusses kann zudem eine Echtzeitfähigkeit wichtig sein, um beispielsweise Ventile entsprechend zu steuern. Auch ständige Bewegung, Erschütterungen und andere physikalische Störgrößen müssen für den Einsatz genauso berücksichtigt werden, wie ein fehlerfreier Betrieb trotz z.B. elektromagnetischer Störimpulse. Hinzu kommt, dass oftmals keine Möglichkeit der ständigen Verbindung (beispielsweise Datenverbindungen zur Überwachung oder Synchronisation) zu solch einem Gerät besteht. Selbst eine ständige, stabile Energieversorgung ist oftmals nicht sichergestellt. Entsprechendes gilt auch bei Flammenwächtern. Ein Flammenwächter dient der Überwachung des Vorhandenseins einer Flamme, z.B. mindestens in einem Teilbereich einer Brennkammer. Wesentlicher Bestandteil eines Flammenwächters ist dabei ein Flammensensor zum Erfassen einer physikalischen Größe einer Flamme, insbesondere einer Intensität elektromagnetischer Strahlung und Erzeugen eines zugehörenden elektrischen Sensorsignals.

Dennoch ist es auch im Embedded-Umfeld, insbesondere im Umfeld derartiger Sensoren, notwendig, Sicherheitsmechanismen vorzusehen, so dass nur berechtigte Zugriffe auf solche Systeme von außen möglich sind. Allerdings stellt der Mangel an Ressourcen, das schwierige Einsatzumfeld und ggf. fehlende Anbindung an Rechenzentren und Server für die Hersteller eine neue, hohe Herausforderung dar.

Die deutsche Patentanmeldung DE102019106528 ist weiterer Stand der Technik.

Bevor hier näher auf die vorliegende Erfindung eingegangen wird, ist es aber notwendig, zunächst einige nachfolgend benutzte Begriffe kurz zu erläutern.

### Anfragendes Gerät

Das anfragende Gerät stellt eine Anfrage auf Zugriff (beispielsweise einer Ressource) des beglaubigenden Gerätes.

### Beglaubigendes Gerät

Das beglaubigende Gerät überprüft die Angabe des anfragenden Gerätes auf Validität. Bei positiver Prüfung wird eine Authentifizierung ausgesprochen, andernfalls wird der Zugriff abgelehnt.

### OTP

OTP steht für "One-time-Password" (zu Deutsch: Einmalpasswort). Ein Einmalkennwort oder Einmalpasswort ist ein Kennwort zur Authentifizierung oder auch Autorisierung. Jedes Einmalkennwort sollte nur für eine einmalige Verwendung gültig sein und sollte daher kein zweites Mal benutzt werden.

### Challenge-Response

Das Challenge-Response-Verfahren (übersetzt etwa *Aufforderung-Antwort-Verfahren*) ist ein sicheres Authentifizierungs-verfahren eines Teilnehmers auf Basis von Wissen. Hierbei stellt ein Teilnehmer eine Aufgabe (engl. *challenge*), die der andere lösen muss (engl. *response*), um zu beweisen, dass er eine bestimmte Information (z.B. den verwendeten Algorithmus oder ein Shared-Secret) kennt, ohne diese Information selbst zu übertragen. Dies ist ein Schutz dagegen, dass die bestimmte Information (z.B. ein Passwort) von Angreifern auf der Leitung mitgehört werden kann.

### CLI (Command Line Interface)

Eine Kommandozeilenschnittstelle (CLI) nimmt Befehle an ein Computerprogramm in Form von Textzeilen entgegen.

### IT

"IT" ist der gebräuchliche Begriff für das gesamte Spektrum von Technologien zur Informationsverarbeitung, einschließlich Software, Hardware, Kommunikationstechnologien und zugehörige Dienstleistungen. Im Allgemeinen umfasst die IT keine eingebetteten (Embedded) Technologien, die Daten für den Unternehmensgebrauch erzeugen.

### OT

Operationelle Technologie (OT) ist Hard- und Software, die durch die direkte Überwachung und/oder Steuerung von physikalischen Geräten, Anlagen, Prozessen und Ereignissen eine Veränderung feststellt oder bewirkt.

### HMAC-SHA1

Ein Message Authentication Code (MAC; deutsch: "Nachrichtenauthentifizierungscode") dient dazu, Gewissheit über den Ursprung von Daten oder Nachrichten zu erhalten und ihre Integrität zu überprüfen. MAC-Algorithmen erfordern zwei Eingabeparameter, erstens die zu schützenden Daten und zweitens einen geheimen Schlüssel. Die MAC-Algorithmen berechnen aus beidem eine Prüfsumme, den Message Authentication Code. Ein Keyed-Hash Message Authentication Code (HMAC) ist ein Message Authentication Code (MAC), dessen Konstruktion auf einer kryptografischen Hash-Funktion, wie beispielsweise dem Secure Hash Algorithm (SHA), und einem geheimen Schlüssel basiert. Die Kombination wird als HMAC-SHA1 bezeichnet, wobei die Zahl 1 für die verwendete Variante der kryptografischen Hash-Funktion steht.

### Trunkation

In der Mathematik und Informatik versteht man unter Trunkierung die Begrenzung der Anzahl der Stellen rechts vom Dezimalpunkt. Hier bedeutet dies die Kürzung der Länge eines gegebenen Ausgabewertes. Ein trunkierter Wert ist demnach ein in seiner Länge gekürzter Wert.

### OTP-Token-Digits

Die Anzahl der OTP-Token-Digits beschreibt die Anzahl der Ziffern und somit die Länge, die ein berechneter OTP-Token aufweisen muss.

Derzeit sind unterschiedliche Verfahren zur Authentifizierung bekannt und gebräuchlich. Das OTP-Verfahren ist dabei eines der am häufigsten eingesetzten Verfahren für eine 2FA. Für das OTP-Verfahren gibt es insbesondere drei gängige Möglichkeiten der Umsetzung.

### HOTP - "HMAC-based One-time Password Algorithmus" (eine Definition dieses Algorithmus findet sich im allgemein zugänglichen Dokument "Request for Comments No. 4226", kurz: RFC 4226)

Ein gemeinsames Geheimnis (OTP-Schlüssel) zwischen dem Gerät des Benutzers und dem beglaubigenden Gerät wird mittels kryptographischer Algorithmen und einem Zähler, der sich bei jedem Anmeldeversuch erhöht, zur Anmeldung des Benutzers benötigt.

Dieser Zähler muss sich, sowohl auf dem beglaubigenden Gerät als auch auf dem anfragenden Gerät des Benutzers immer im synchronisierten Bereich befinden, denn nur dann kann eine daraus resultierende Berechnung eines gemeinsamen Tokens (z.B. 6-8 OTP-Token-Digits) als gültig anerkannt werden.

Problematisch beim HOTP-Verfahren ist, dass die Zähler beider Geräte, also des anfragenden und des beglaubigenden Gerätes, immer in einem vordefinierten Bereich zueinander liegen müssen. Wird ein HOTP-Generator für mehrere beglaubigende Geräte genutzt, erhöht sich der Zähler auf dem anfragenden Gerät in einem anderen Intervall als auf den beglaubigenden Geräten.

### HOTP-Beispiel:

- Drei beglaubigende Geräte (A, B, C)
- Ein anfragendes Gerät

| | | |
|---|---|---|
| Anmeldung **1** an beglaubigendes Gerät "A" | Zähler beglaubigendes Gerät "A" = **1** | Zähler anfragendes Gerät = **1** |
| Anmeldung **1** an beglaubigendes Gerät "B" | Zähler beglaubigendes Gerät "B" = **1** | Zähler anfragendes Gerät = **2** |
| Anmeldung **1** an beglaubigendes Gerät "C" | Zähler beglaubigendes Gerät "C" = **1** | Zähler anfragendes Gerät = **3** |
| Anmeldung **2** an beglaubigendes Gerät "A" | Zähler beglaubigendes Gerät "A" = **2** | Zähler anfragendes Gerät = **4** |

Ein Synchronhalten des Zählers des anfragenden Gerätes zu dem Zähler der beglaubigenden Geräte ist nicht möglich, sie "driften" mit jeder neuen Anmeldung weiter auseinander.

Ein anfragendes Gerät kann somit immer nur für den Zugang zu einem beglaubigenden Gerät genutzt werden. Die Verwendung eines einzelnen HOTP-Schlüssels für die Authentisierung an mehreren beglaubigenden Geräten ist damit nicht möglich. Dies bedeutet, dass z.B. für ein anfragendes Gerät zum Zugriff auf mehrere hundert beglaubigende Geräte auch mehrere hundert HOTP-Schlüssel genutzt und verwaltet werden müssen, da sich für jeden HOTP-Schlüssel die Zähler-Werte voneinander unterscheiden können.

### TOTP - "Time-based One-time Password Algorithmus" (eine Definition dieses Algorithmus findet sich im allgemein zugänglichen Dokument "Request for Comments No. 6238", kurz: RFC 6238)

Ein gemeinsames Geheimnis (OTP-Schlüssel) zwischen dem Gerät des Benutzers und dem beglaubigenden Gerät wird mittels kryptographischer Algorithmen und der aktuellen, gemeinsamen Zeit des beglaubigenden und anfragenden Gerätes, zur Anmeldung des Benutzers benötigt. Diese Zeit muss sowohl auf dem beglaubigenden Gerät als auch auf dem anfragenden Gerät des Benutzers immer synchron sein, um eine daraus resultierende Berechnung eines gemeinsamen Tokens (z.B. 6-8 OTP-Token-Digits, zyklisch wechselnd) als gültig zu erkennen. Wird ein TOTP-Generator für die Anmeldung genutzt, muss sichergestellt sein, dass alle involvierten Geräte zwingend dieselbe Zeit zur Berechnung nutzen. Gerade im industriellen Umfeld (Sensoren, Aktoren, Steuerungen) ist eine Zeitsynchronisation aber selten und stellenweise überhaupt nicht vorgesehen oder gar unmöglich. Je weiter die, jeweils von dem anfragenden und beglaubigenden Gerät, verwendeten Zeitstempel, von denen die TOTP-Tokens abgeleitet werden, innerhalb des tolerierten TOTP-Zeitintervalls, also der festgelegten Gültigkeitsdauer eines TOTP-Tokens, voneinander abweichen, desto schwieriger wird eine Anmeldung, da das Akzeptanzfenster für den TOTP-Token immer kleiner wird. Ist die Abweichung größer als das TOTP-Zeitintervall, so ist keine Anmeldung mehr möglich. Wird also ein TOTP-Verfahren angestrebt, muss zwingend eine synchronisierte Zeit auf beiden Geräten sowohl auf dem anfragenden als auch beglaubigenden Gerät vorliegen.

### OCRA - "OATH Challenge-Response Algorithm" (eine Definition dieses Algorithmus findet sich im allgemein zugänglichen Dokument "Request for Comments No. 6287", kurz: RFC 6287)

Das Challenge-Response-Verfahren ist eine allgemein akzeptierte Methode, welche den Anwendungsfällen und Szenarien dient, dass Benutzer, die kein synchronisiertes Authentifizierungssystem verwenden können, eine asynchrone Variante eines Authentifizierungssystems zur Verfügung gestellt bekommen. Ein solcher Challenge-Response-Modus zur Authentifizierung ist bekannt. Mehrere Hersteller bieten bereits Software-Anwendungen und Hardware-Geräte an, die ein Challenge-Response-Verfahren implementieren - aber jeder von ihnen verwendet nachteiliger Weise herstellerspezifische, proprietäre Algorithmen. Durch die Nutzung von OCRA wird das herstellerspezifische, proprietär umgesetzte Challenge-Response-Verfahren auf eine einheitliche, standardisierte und somit auch Herstellerübergreifendes Art angewandt. Die Verwendung der unzähligen, herstellerspezifischen Umsetzungen und der Verzicht auf die standardisierte Lösung mittels OCRA dürfte der Grund dafür sein, dass keine Hardware-Dongles für das OCRA-Verfahren im Markt verfügbar sind, die eine automatisierte Nutzung zulassen. Proprietäre Varianten sind hingegen weiterhin gängig. Somit setzt die Verwendung eines Challenge-Response-Verfahrens mittels Hardware-Dongles eine feste Bindung und eine damit verknüpfte Abhängigkeit eines Dongles an einen speziellen Hersteller voraus, was in den Systemen mit Komponenten verschiedenster Hersteller dem Einsatz von Hardware-Dongles für das OCRA-Verfahren entgegensteht.

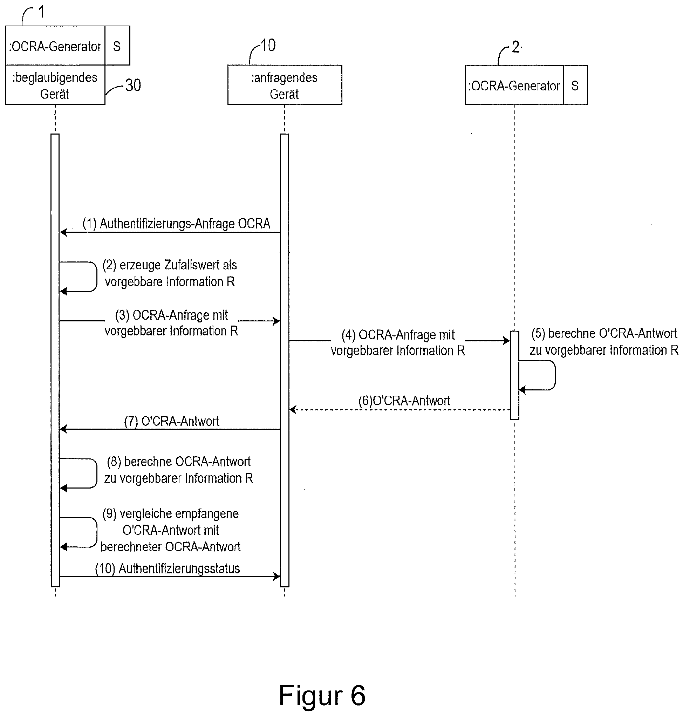

Anhand von Figur 6 wird dieses OCRA-Verfahren zur Authentifizerung kurz erläutert. Dabei wird angenommen, dass eine Single-Faktor-Authentifizierung erfolgt.

Dabei kommuniziert ein anfragendes Gerät 10 mit einem beglaubigenden Gerät 30. Das anfragende Gerät 10 verfügt über eine Schnittstelle, an die ein OCRA-Generator 2 hardwaremäßig angeschlossen oder softwaremäßig implementiert ist. Das beglaubigende Gerät 30 weist einen identischen OCRA-Generator 1 des gleichen Herstellers auf. Um ein Authentifizierungsverfahren zwischen dem anfragenden Gerät 10 und dem beglaubigenden Gerät 30 durchzuführen, ist in dem anfragenden Gerät 10 und in dem beglaubigenden Gerät 30 jeweils ein Shared-Secret S abgespeichert. Im anfragenden Gerät 10 ist dieses Shared-Secret S in dem OCRA-Generator 2 und im beglaubigenden Gerät 30 im OCRA-Generator 1 gespeichert.

Folgende Verfahrensschritte werden durchgeführt. Das anfragende Gerät 10 stellt über einen Kommunikationskanal eine Authentifizierungs-Anfrage OCRA an das beglaubigende Gerät 30 (Schritt 1). Das beglaubigende Gerät 30 generiert dann einen Zufallswert als vorgebbare Information R (Schritt 2). Diese Information R wird dann an das anfragende Gerät 10 übertragen (Schritt 3). Das anfragende Gerät 10 stellt anschließend eine OCRA-Anfrage mit der Information R an den OCRA-Generator 2 (Schritt 4). Die Anfrage wird an den OCRA-Generator 2 weitergegeben, damit dort die O'CRA-Antwort zu der vorgebbaren Information R berechnet werden kann (Schritt 5). Das anfragende Gerät 10 erhält die errechnete O'CRA-Antwort des OCRA-Generators 2 (Schritt 6). Diese O'CRA-Antwort wird anschließend an das beglaubigende Gerät 30 übertragen (Schritt 7). Für die Durchführung des Vergleichs der empfangenen O'CRA-Antwort berechnet das beglaubigende Gerät 30 selbst eine OCRA-Antwort. Diese OCRA-Antwort basiert auf der in Schritt 2 erzeugten vorgebbaren Information R, also dem zuvor erzeugten Zufallswert (Schritt 8).

Anschließend vergleicht das beglaubigende Gerät 30 die empfangene O'CRA-Antwort mit der selbst berechneten OCRA-Antwort (Schritt 9). Das beglaubigende Gerät 30 überträgt den Status des Authentifizierungsvorgangs, ob dieser erfolgreich war oder fehlgeschlagen ist, an das anfragende Gerät 10 (Schritt 10). War der Authentifizierungsvorgang erfolgreich, d.h. die O'CRA-Antwort mit der OCRA-Antwort identisch, wird eine vom anfragenden Gerät 10 angefragte Interaktion durchgeführt, andernfalls gesperrt.

Problematisch bei diesem bekannten OCRA-Verfahren ist jedoch, wie oben erwähnt, dass die Hersteller regelmäßig ganz eigene, herstellerspezifische und damit proprietäre Algorithmen zur Durchführung eines Challenge-Response-Verfahrens einsetzen und deshalb die Anwender gezwungen sind immer Challenge-Response-Generatoren gleicher Hersteller zu verwenden, was einer breiten und massenhaften Einsatzmöglichkeit des OCRA- Authentifizierungsverfahrens zuwiderläuft.

Der vorliegenden Erfindung liegt die Aufgabe zu Grunde, ein Verfahren und eine Vorrichtung anzugeben für eine von einer Systemzeit unabhängigen Authentifizierung, welche Interaktionen in auf Microcontroller- und/oder FPGA-basierenden Geräten oder Vorrichtungen und insbesondere in eingebetteten Systemen und/oder Flammenwächtern ermöglicht. Darüber hinaus ist es Ziel der Erfindung, auch eine Vorrichtung zur Durchführung eines solchen Verfahrens bereitzustellen und einen Flammenwächter mit einer derartigen Vorrichtung zur Verfügung zu stellen.

Diese Aufgabe wird gelöst durch ein Verfahren mit den Merkmalen des Anspruchs 1.

Weiterbildungen dieses Verfahrens sind Gegenstand der Unteransprüche 1 bis 11.

Eine Vorrichtung zur Durchführung des Verfahrens ist Gegenstand des Anspruchs 12. Ein Flammenwächter gemäß der vorliegenden Erfindung ist Gegenstand des Anspruchs 14.

Das erfindungsgemäße Verfahren sieht also zur von einer Systemzeit unabhängigen Authentifizierung von Interaktionen in auf Microcontroller- und/oder FPGA- basierenden Geräten oder Vorrichtungen, insbesondere eingebetteten Systemen und/oder Flammenwächtern, folgendes vor: Es wird jeweils in einem anfragenden Gerät und in einem beglaubigenden Gerät ein kryptographischer, Hash-Wert, der auch in trunkierter Form vorliegen kann, nach Maßgabe eines von beiden Geräten benutzten, gemeinsamen Shared-Secrets und einem in beiden Geräten in einem nach dem TOTP-Verfahren arbeitenden TOTP-Modul errechnet. Dabei wird den TOTP-Modulen anstelle einer Systemzeit eine vorgebbare Information zur Berechnung des jeweiligen Hash-Wertes zugeführt und zwar derart, dass die vorgebbare Information (z.B. ein Zufallswert) vom beglaubigenden Gerät erzeugt oder bereitgestellt und bei einer Anfrage des anfragenden Gerätes dem anfragenden Gerät übermittelt wird. Dort wird es dann dem dortigen TOTP-Modul zur Berechnung eines eigenen Hash-Wertes zugeführt und der dann dort errechnete Hash-Wert zu dem beglaubigenden Gerät übertragen. Bei einer Übereinstimmung dieses vom beglaubigenden Gerät empfangenen Hash-Wertes mit dem im beglaubigenden Gerät mit der vorgegebenen Information errechneten Hash-Wertes ist eine erfolgreiche Authentifizierung durchgeführt und die Interaktion wird freigeben. Andernfalls wird die Interaktion bei einer Nichtübereinstimmung gesperrt.

In einer bevorzugten Ausführungsform der Erfindung ist das dem anfragenden Gerät zugeordnete TOTP-Modul ein in das anfragende Gerät von extern einsteckbarer Hardware-Dongle. Dabei kann vorgesehen werden, dass mit dem Einstecken des Hardware-Dongles die Authentifizierungsprozedur selbsttätig gestartet wird.

Die erwähnten Interaktionen können in auf Microcontroller und/oder FPGA's basierenden Geräten oder Einrichtungen z.B. Konfigurations-, Update-, Parametrierungs-, Eingabe-, Mess-, Schalt-, Überwachungs- und/oder Steuerungsfunktionen sein.

In einer anderen Weiterbildung der Erfindung kann vorgesehen werden, dass zumindest eines der TOTP-Module als Softwareimplementierung unmittelbar im anfragenden Gerät und/oder beglaubigenden Gerät als realisiert ist. Vorzugsweise ist eine solche Softwareimplementierung im beglaubigenden Gerät realisiert.

Darüber hinaus ist es möglich, dass zur Realisierung einer 2FA eine Vorab-Authentifizierungsanfrage mit vorgegebenen Zugangsdaten vom anfragenden Gerät an das beglaubigende Gerät gestellt oder dort direkt eingegeben wird und nur bei einer hierbei erfolgreichen Validitätsprüfung eine weitere Authentifizierungsanfrage ermöglicht wird.

Es liegt auch im Rahmen der vorliegenden Erfindung, dass als Zugangsdaten ein Passwort und/oder ein Nutzername und/oder ein Zertifikat verwendet werden. Dabei können die Zugangsdaten auf einer drahtlos oder drahtgebunden arbeitenden Chipeinheit, insbesondere einer Smartcard oder einem USB-Modul, gespeichert sein.

In einer Weiterbildung der Erfindung ist vorgesehen, dass die vorgebbare Information ein Zufallswert ist, der in einer Ausgestaltung aus einer vorgegebenen Liste von Werten ausgewählt werden kann.

Zudem ist es möglich, dass ein und dasselbe Shared-Secret zur Authentifizierung von mehreren anfragenden Geräten verwendet wird.

Die Erfindung beansprucht auch unabhängigen Schutz für einen Flammenwächter. Denn ein besonders geeignetes Anwendungsfeld des erfindungsgemäßen Verfahrens ist, dass dieses bei Sensoren, insbesondere bei Flammenwächtern eingesetzt werden kann.

Das erfindungsgemäße Verfahren kann auch bei anderen Sensorsystemen vorteilhaft eingesetzt werden, wie z.B. bei Durchflusssensoren, Füllstandsensoren usw..

Eine erfindungsgemäße Vorrichtung zur Durchführung des Verfahrens zeichnet sich wie folgt aus: Es ist eine Microcontroller und/oder FPGA basierende Vorrichtung, wie beispielsweise ein Flammenwächter, zur von einer Systemzeit unabhängigen Authentifizierung von Interaktionen vorgesehen, bei welcher jeweils in einem anfragenden Gerät und in einem beglaubigenden Gerät ein kryptographischer, Hash-Wert, der optional in trunkierter Form vorliegen kann, nach Maßgabe eines von beiden Geräten benutzten, gemeinsamen Shared-Secrets und einem in beiden Geräten in einem nach dem TOTP-Verfahren arbeitenden TOTP-Modul errechenbar ist, wobei den TOTP-Modulen anstelle einer Systemzeit eine vorgebbare Information zur Berechnung des jeweiligen Hash-Wertes zuführbar ist. Dies erfolgt derart, dass die vorgebbare Information vom beglaubigenden Gerät erzeugbar oder bereitstellbar und bei einer Anfrage des anfragenden Gerätes dem anfragenden Gerät übermittelbar ist, wo sie dann dem dortigen TOTP-Modul zur Berechnung eines Hash-Wertes zuführbar und der dann dort errechnete Hash-Wert zu dem beglaubigenden Gerät übertragbar ist, und dass bei einer Übereinstimmung dieses vom beglaubigenden Gerät empfangbaren Hash-Wertes mit einem im beglaubigenden Gerät mit der vorgebbaren Information errechneten Hash-Wertes eine erfolgreiche Authentifizierung durchführbar ist und die Interaktion freigebbar und andernfalls bei einer Nichtübereinstimmung sperrbar ist.

Besonders bevorzugt kann eine solche Vorrichtung in einem eingebetteten System ausgebildet sein.

Die vorliegende Erfindung vermeidet die genannten Probleme bei den Verfahren HOTP, TOTP und OCRA in einfacher Weise dadurch, dass das bekannte TOTP-Verfahren mit seiner offengelegten TOTP-Algorithmik zwar eingesetzt, anstelle der dafür notwendigen Systemzeit jedoch eine vorgebbare Information, insbesondere ein vorgebbarer Zufallswert, Verwendung findet. Es werden somit vorteilhafterweise keine proprietären Algorithmen verwendet.

In einer bevorzugten Ausführungsform der Erfindung wird ein kommerziell verfügbarer Hardware-Dongle, der z.B. als USB-Stick oder Smartcard oder Ähnliches ausbildet sein kann, mit TOTP-Algorithmus eingesetzt. Der Hardware-Dongle muss dabei ein manuelles Setzen der an sich zu verwendenden Zeit zulassen. Dieser Hardware-Dongle bekommt erfindungsgemäß einen angepassten Übergabewert in Form einer vorgebbaren Information (z.B. Zufallswert) anstatt des Systemzeitstempels.

Embedded Geräte besitzen, wie oben beschrieben, häufig nur eine limitierte Systemleistung und ebenfalls ist häufig kein synchronisierter Systemzeitstempel verfügbar. Das erfindungsgemäße Verfahren dagegen ermöglicht eine Systemzeitstempel-unabhängige Authentifizierung auf einem Endgerät. Dabei kann ein einzelner Hardware-Dongle für die Authentifizierung an mehreren Endgeräten, d.h. beglaubigenden Geräte, verwendet werden.

In Tests konnte die Realisierbarkeit des erfindungsgemäßen Verfahrens bereits nachgewiesen werden. Dabei wurde eine Umsetzung des TOTP-Verfahrens und einem manuellen Setzen der Zeit mit zwei unterschiedlichen TOTP-fähigen Hardware-Dongles von zwei unterschiedlichen Hardwareherstellern geprüft. Als Beispiel sind hier der Hardware-Dongles "Nitrokey Pro 2" *(siehe* *https:*//*shop.nitrokey.com*/*de DE*/*shop*/*product*/*nk-pro-2-nitrokey-pro-2-3*) und der "OnlyKey" *(siehe* *https:*//*onlykey.io*/*de genannt*). Über deren CLI-Schnittstelle kann durch einen Befehl ein Wert (üblicherweise ein Zeitwert) als Eingabe zur Generierung eines TOTP-Tokens an den TOTP-Generator übergeben werden. Die beiden genannten Hardware-Dongles dienen lediglich als Beispiel. Eine Umsetzung des erfindungsgemäßen Verfahrens ist mit jedem beliebigen Hardware- oder Software-Generator für TOTP-Tokens realisierbar, sofern dort ein manuelles Setzen der Zeit zur Berechnung des TOTP-Tokens möglich ist.

Bei einem Nitrokey Pro 2 oder OnlyKey handelt es sich um ein USB-Security Modul zur Verarbeitung spezifischer kryptographischer Aufgaben. Dieses kann unter anderem für die Verwaltung und Verwendung von OTP-Schlüsseln genutzt werden. Auf dem Nitrokey Pro 2 können bis zu 24 OTP-Schlüssel gleichzeitig verwaltet werden. Diese werden in sogenannten Slots gespeichert. Bei der Anfrage eines TOTP-Tokens wird der Slot angegeben. Abhängig von dem gewählten Slot wird der dazugehörige OTP-Schlüssel für die TOTP-Token-Erzeugung verwendet. Dieses TOTP-Token wird dann zurückgegeben.

Die vorliegende Erfindung wird nachfolgend anhand von Ausführungsbeispielen und Flussdiagrammen näher erläutert. Es zeigen:
- Figur 1: einen prinzipiellen Ablauf des erfindungsgemäßen Verfahrens,
- Figur 2: ein Blockschaltbild einer Durchflusssensoreinrichtung,
- Figur 3: ein beispielhaftes Ablaufdiagramm eines Authentifizierungsverfahrens für einen Durchflusssensor gemäß Figur 2,
- Figur 4: ein Blockschaltbild einer Kransteuerung,
- Figur 5: ein beispielhaftes Ablaufdiagramm eines Authentifizierungsverfahrens für eine Kransteuerung gemäß Figur 4, und
- Figur 6: den bereits eingangs beschriebenen, prinzipiellen Ablauf eines bekannten OCRA-Authentifizierungsverfahrens.

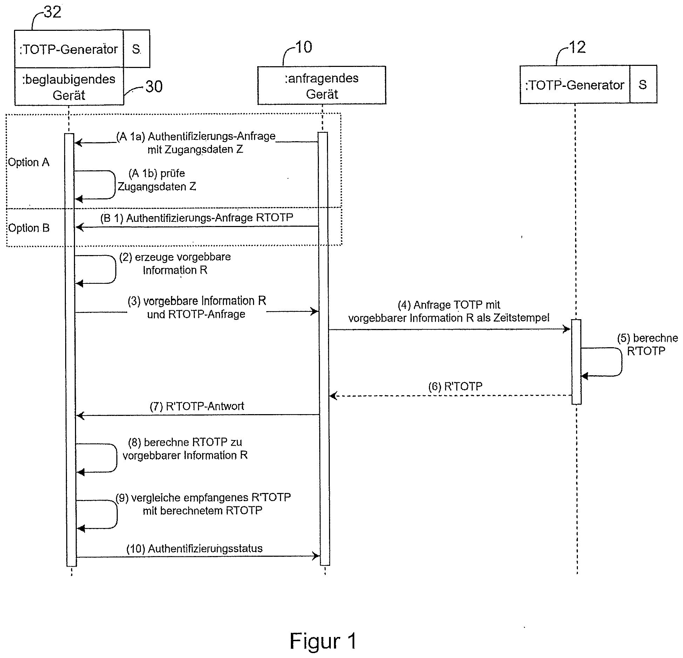

Das in Figur 1 dargestellte Flussdiagramm zeigt exemplarisch einen möglichen Ablauf zur Authentifizierung von Interaktionen in einem auf Mikrocontroller- und/oder FPGA-basierenden Gerät oder einer Vorrichtung, wie es insbesondere bei eingebetteten Systemen und/oder Flammenwächtern zum Einsatz kommen kann. Wesentlich ist dabei, dass dieses Verfahren zur Authentifizierung mit einem herkömmlichen TOTP-Modul ausgeführt wird, jedoch voraussetzungsgemäß von einer Systemzeit unabhängig ist.

Dabei kann das TOTP-Modul in die Vorrichtung oder das Gerät softwaremäßig implementiert sein oder als Hardware-Dongle in das Gerät oder die Vorrichtung eingesteckt sein.

Das in Figur 1 skizzierte Verfahren kann als Single-Faktor-(Option B) oder als Teil einer Multi-Faktor-Authentifizierung, hier einer 2FA (Option A) realisiert sein.

Der zeitliche Verlauf des Authentifizierungsverfahrens in Figur 1 stellt sich folgendermaßen dar:
Dabei wird vorausgesetzt, dass ein anfragendes Gerät 10 mit einem beglaubigenden Gerät 30 kommuniziert. Das anfragende Gerät 10 verfügt hierbei über eine Schnittstelle, an die ein sogenannter TOTP-Generator 12 angeschlossen werden kann. Dieser TOTP-Generator 12 kann beispielsweise in einem Hardware-Dongle realisiert sein. Im Allgemeinen ist ein solcher Hardware-Dongle als USB-Stick ausgebildet. Das beglaubigende Gerät 30 weist ebenfalls einen TOTP-Generator 32 auf. Dieser ist vorzugsweise softwaremäßig in das beglaubigende Gerät 30 implementiert. Um ein Authentifizierungsverfahren zwischen dem anfragenden Gerät 10 und dem beglaubigenden Gerät 30 durchzuführen, ist in dem anfragenden Gerät 10 und in dem beglaubigenden Gerät 30 jeweils ein sogenanntes Shared-Secret S abgespeichert. Im anfragenden Gerät 10 ist dieses Shared-Secret S vorzugsweise in dem ansteckbaren TOTP-Generator 12, also vorzugsweise in dem erwähnten Hardware-Dongle, gespeichert. Folgende Verfahrensschritte werden durchgeführt.
- **1a (nur A) - Authentifizierungs-Anfrage des anfragenden Geräts 10 mit Zugangsdaten:**
   Das anfragende Gerät 10 stellt über einen beliebigen Kommunikationskanal, der drahtgebunden oder drahtlos ausgebildet sein kann, eine Authentifizierungs-Anfrage an das beglaubigende Gerät 30. Ebenfalls ist eine Authentifizierungs-Anfrage via Direkteingabe, z.B. über eine Tastatur oder einen Bildscanner oder Ähnlichem am beglaubigenden Gerät 30 möglich. Die Authentifizierungs-Anfrage beinhaltet Zugangsdaten Z, z.B. aber nicht darauf begrenzt: ein Passwort, Nutzername und Passwort, Zertifikat oder Smart-card usw..
- **1b (nur A) - Prüfung der Zugangsdaten des anfragenden Geräts 10:**
   Das beglaubigende Gerät 30 prüft die Validität der erhaltenen Zugangsdaten Z.
- **1 (nur B) - Authentifizierungs-Anfrage des anfragenden Geräts:**
   Das anfragende Gerät 10 stellt über einen beliebigen Kommunikationskanal, der ebenfalls drahtgebunden oder drahtlos sein kann, eine Authentifizierungs-Anfrage TOTP an das beglaubigende Gerät 30. Ebenfalls ist eine Authentifizierungs-Anfrage via Direkteingabe am beglaubigenden Gerät 30 möglich.
- **2 - Erzeugung der vorgebbaren Information R auf dem beglaubigenden Gerät:**
   Das beglaubigende Gerät 30 generiert eine vorgebbare Informationen R, z. B. einen Zufallswert, im Wertebereich des TOTP-Verfahrens. Anstatt der Generierung einer vorgebbaren Information R können ebenfalls vordefinierte, andere Informationen, z.B. Zahlenwerte aus einer Liste genutzt werden. Eine Kombination aus Beidem ist ebenso möglich.
- **3 - Übertragung der vorgebbaren Information R zum anfragenden Gerät 10:**
   Die vorgebbare Information R muss, über einen beliebigen Kommunikationskanal an das anfragende Gerät 10 übertragen werden. Dies kann über eine Antwort auf die Authentifizierungs-Anfrage oder mit einer eigenen Anfrage an das anfragende Gerät 10 umgesetzt werden. Ebenso ist eine optische Ausgabe auf dem beglaubigenden Gerät 30 möglich. Diese muss dem anfragenden Gerät 10 durch Eingabe oder Abscannen übergeben werden.
- **4 - Anfrage an den TOTP-Generator des anfragenden Gerätes 10:**
   Das anfragende Gerät 10 stellt eine TOTP-Anfrage mit der vorgebbaren Information R (RTOTP-Anfrage) als fiktiven Zeitstempel an den TOTP-Generator 12. Die Anfrage wird an einen extern durch Einstecken in einen entsprechenden Steckanschluss in das anfragende Gerät 10 angebundenen TOTP-Generator 12, insbesondere einen Hardware-Dongle, weitergegeben. Anstelle eines einsteckbaren Hardware-Dongles kann der TOTP-Algorithmus im anfragenden Gerät 10 auch mittels einer Software-Implementierung realisiert sein.
- **5 - Berechnung des R'TOTP**
   Durchführung der TOTP Berechnung mit der vorgebbaren Information R auf dem TOTP-Generator 12 entsprechend der Anfrage. Diese Berechnung kann von dem Hardware-Dongle oder einer Software-Implementierung umgesetzt werden.
- **6 - Antwort des TOTP-Generators 12:**
   Das anfragende Gerät 10 erhält die R'TOTP-Antwort des TOTP-Generators 12. Das im TOTP-Generator 12 errechnete Ergebnis ist ein Hash-Wert, der als trunkierter Hash-Wert R'TOTP an das anfragende Gerät 10 weitergegeben wird.
- **7 - Übertragung der R'TOTP-Antwort zum beglaubigenden Gerät 30:**
   Die R'TOTP-Antwort muss, über einen beliebigen Kommunikationskanal an das beglaubigende Gerät 30 übertragen werden. Ebenso ist eine direkte Eingabe der R'TOTP-Antwort am beglaubigenden Gerät 30 möglich, sofern keine Verbindung zwischen anfragendem Gerät 10 und beglaubigendem Gerät 30 besteht.
- **8 - Berechnung des Vergleichswerts auf dem beglaubigenden Gerät 30:**
   Für die Durchführung des Vergleichs der empfangenen R'TOTP-Antwort muss das beglaubigende Gerät 30 selbst ebenfalls eine RTOTP-Antwort basierend auf zuvor erzeugter vorgebbarer Information R berechnen. Die Berechnung des Vergleichswerts kann zu einem beliebigen Zeitpunkt nach Schritt 2 und vor Schritt 9 durchgeführt werden.
- **9 - Vergleich der RTOTP-Antworten:**
   Abschließend muss das beglaubigende Gerät 30 die empfangene R'TOTP-Antwort mit der selbst berechneten RTOTP-Antwort vergleichen. Nur wenn diese identisch sind, ist die Prüfung der R'TOTP-Antwort erfolgreich.
- **10 - Übertragung vom Authentifizierungsstatus:**
   Das beglaubigende Gerät 30 überträgt den Status des Authentifizierungsvorgangs, ob dieser erfolgreich war oder fehlgeschlagen ist, an das anfragende Gerät 10.
   Der Authentifizierungsvorgang ist erfolgreich, wenn die Prüfung der RTOTP-Antwort aus Schritt 9 erfolgreich war und bei Option A zusätzlich die Prüfung der Validität der Zugangsdaten Z ergeben hat, dass die Zugangsdaten valide sind. War der gesamte Authentifizierungsvorgang erfolgreich, wird die angefragte Interaktion durchgeführt, andernfalls nicht freigegeben und gesperrt.

Anhand der Darstellung der prinzipiellen Wirkungsweise des erfindungsgemäßen Authentifizierungsverfahrens werden dessen Vorteile klar. Es muss lediglich beim anfragenden Gerät 10 und bei dem beglaubigendem Gerät 30 ein gemeinsames Shared-Secret S bekannt, vorzugsweise gespeichert, sein. Dieses Shared-Secret S ist dabei vorzugsweise nicht auslesbar abgelegt. Des Weiteren wird eine vorgebbare Information R, z.B. ein generierter Zufallswert oder ein Zufallswert aus einer Liste, beim anfragenden Gerät 10 eingegeben und mit einem herkömmlichen TOTP-Generator 12 in einen trunkierten Hash-Wert R'TOTP umgerechnet. Das beglaubigende Gerät 30, das die vorgebbare Information voraussetzungsgemäß ebenfalls kennt, errechnet seinerseits mit dem dort vorhandenen TOTP-Modul 32 einen eigenen trunkierten Hash-Wert RTOTP. Bei Übereinstimmung der beiden trunkierten Hash-Werte ist die Authentifizierung über die TOTP-Module 12, 32 erfolgreich.

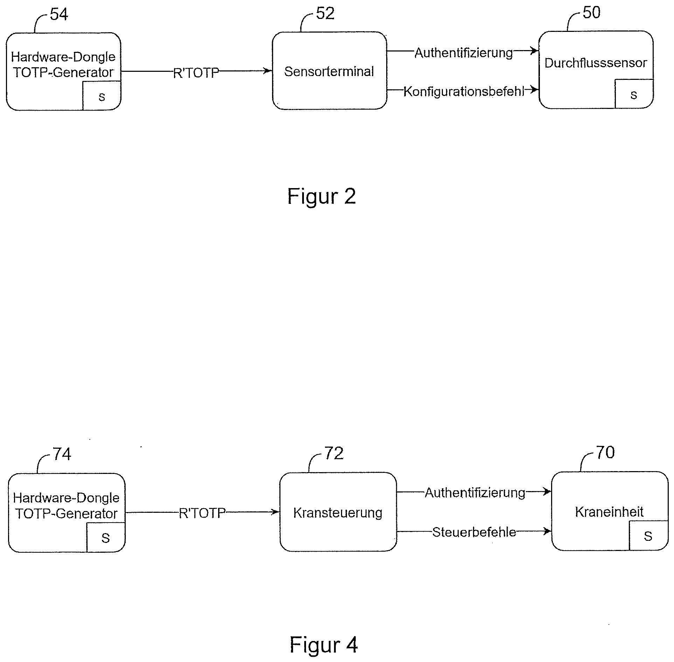

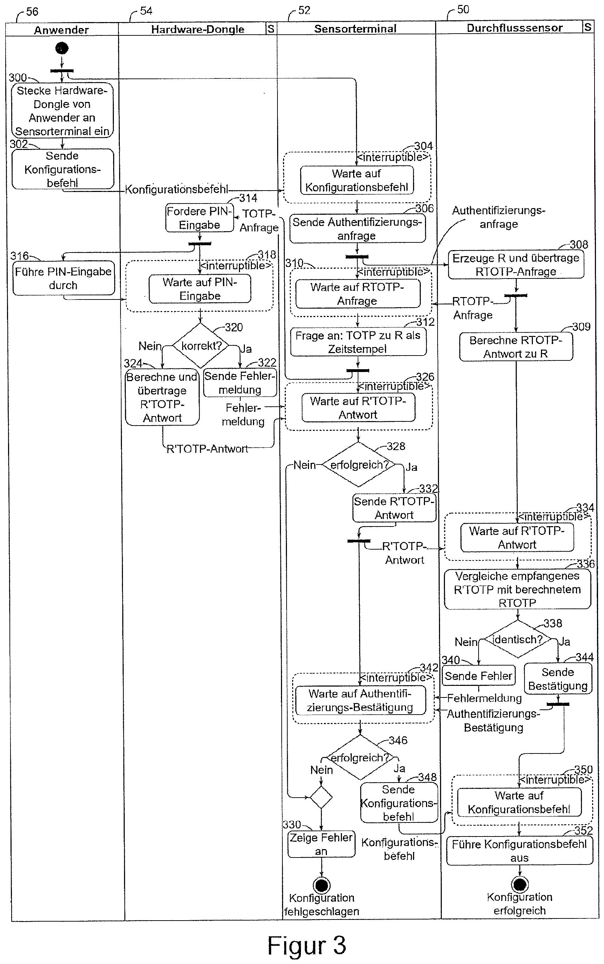

Anhand der Figuren 2 und 3 wird ein konkretes Ausführungsbeispiel des erfindungsgemäßen Verfahrens anhand eines Sensors, wie zum Beispiel eines Durchflusssensors, der in einer Pipeline zur Durchflussmessung Anwendung findet, erläutert. Anstelle eines Durchflusssensors könnte aber auch ein anderer Sensor, insbesondere ein Flammenwächter oder Ähnliches, eine mögliche Anwendung sein, bei der das erfindungsgemäße Verfahren eingesetzt wird. Ein solcher Flammenwächter dient beispielsweise zur Erkennung, ob in einem Brenner eine Flamme vorhanden ist oder nicht.

Bei solchen Sensoren ist es zwingend erforderlich, dass nur geschultes und berechtigtes Personal Zugriff auf diese Sensoren haben. Dies gilt insbesondere für die Wartung, Überwachung, Parametrisierung, Konfiguration, das Updaten und das Steuern dieser Sensoren. Das erfindungsgemäße Verfahren ist hier bestens geeignet.

Um z.B. eine korrekte Abrechnung der durchgeleiteten Flüssigkeitsmenge durchführen zu können, muss der Durchflusssensor korrekt konfiguriert und kalibriert sein. Eine manipulierte Kalibrierung bzw. Durchflussmessung kann erheblichen wirtschaftlichen Schaden verursachen. Hierfür ist es zwingend notwendig, den Zugriff auf den Durchflusssensor abzusichern und nur dazu berechtigten Personen zu erlauben.

Das Blockschaltbild einer Durchflusssensoreinrichtung zeigt Figur 2. Es zeigt einen Durchflusssensor 50, der z.B. unmittelbar an einer nicht dargestellten Pipeline montiert ist, um dort die Durchflussmenge zu erfassen. Entfernt hiervon - beispielsweise in einer Zentrale eines Wasserwerkes - befindet sich ein Terminal 52 oder ein PC, über das beispielsweise drahtlos (z.B. eine WLAN-Verbindung) eine Verbindung zu dem Durchflusssensor hergestellt werden kann. An dem Terminal 52 befindet sich hierfür ein Steckplatz, an dem von einer Bedienperson ein Hardware-Dongle 54 mit einem integrierten TOTP-Generator eingesteckt werden kann.

Im genannten Beispiel erfolgt keine Anmeldung des Anwenders oder der Bedienperson am Terminal 52, sondern eine Anmeldung des Anwenders über das erfindungsgemäße Verfahren direkt an dem Durchflusssensor 50. Dabei stellt der Durchflusssensor 50 selbst im Sinne der vorliegenden Erfindung das beglaubigende Gerät und das Terminal 52 das anfragende Gerät dar. Der Servicetechniker hat Zugriff auf das Terminal 52 und steckt einen für den jeweiligen Durchflusssensor 50 konfigurierten Hardware-Dongle 54 in das Terminal 52 ein. Das Terminal 52 baut nun, vorzugsweise nach einer vorherigen Abfrage einer PIN des Anwenders für den Hardware-Dongle 54 eine Verbindung zum Durchflusssensor 50 auf. Nur wenn das zuvor gespeicherte, gemeinsame Shared-Secret S auf beiden Seiten bekannt ist und somit der RTOTP-Token auf beiden Seiten identisch berechnet wird, kann eine Anmeldung des Anwenders aus Terminal 52 und somit eine Konfiguration bzw. Kalibrierung des Durchflusssensors 50 erfolgen.

Die Berechnung des RTOTP-Tokens erfolgt dabei auf Seiten des Terminals 52 im dort eingesteckten Hardware-Dongle 54. Entsprechend ist also keine feste Zuweisung eines bestimmten Terminals 52 an einen Durchflusssensor 50 notwendig. Auch ist ein Abhandenkommen bzw. Diebstahl des Terminals 52 kein kritischer Vorfall, da dabei keinerlei Authentifizierungsdaten zur Anmeldung am Durchflusssensor 50 entwendet werden können und somit keine unerlaubte Konfiguration des Durchflusssensors 50 allein mit dem Terminal 52 möglich ist.

Über eine sequenzielle Prüfung der weiteren Verfügbarkeit des Hardware-Dongles 54 am Sensorterminal 52 kann zudem gewährleistet werden, dass eine Konfiguration/Kalibrierung nur möglich ist, wenn der Hardware-Dongle 54 eingesteckt ist. Wird der Hardware-Dongle 54 entfernt, erfolgt eine Abmeldung des Anwenders vom Durchflusssensor 50.

Legt der Anwender beispielsweise eine Pause ein, nimmt er den Hardware-Dongle 54 mit. Eine unberechtigte Konfiguration ist somit auch bei ungeschütztem Zugriff auf das Terminal 52 nicht möglich. Allerdings ist ein unbefugter Zugriff zum Hardware-Dongle 54 zu vermeiden. Somit wird ein physikalischer und physischer Schlüssel in Form des Hardware-Dongles 54 zur Anmeldung an einer digitalen Schnittstelle genutzt.

Der Funktionsablauf im Einzelnen stellt sich anhand von Fig. 3 wie folgt dar.

In Fig. 3 ist beispielhaft der Ablauf der Kommunikation zur Authentifizierung in zeitlicher Reihenfolge dargestellt. Der Durchflusssensor 50 kommuniziert hierfür drahtlos oder drahtgebunden mit einem Terminal 52, an das ein Hardware-Dongle 54 eines Benutzers bzw. Anwenders 56 einsteckbar ist. Dieser Hardware-Dongle 54 verfügt intern über einen TOTP-Generator, in welchem ein Shared-Secret S gespeichert ist. Dieses Shared-Secret S ist auch im Durchflusssensor 50 hinterlegt. Der Durchflusssensor 50 verfügt intern ebenfalls über einen TOTP-Generator, der in Form eines TOTP-Moduls, das softwaremäßig implementiert sein kann, realisiert ist.

Es wird angenommen, dass der Anwender 56 Daten aus dem Durchflusssensor 50 auslesen will. Hierfür muss sich der Anwender 56 legitimieren, dass er für dieses Auslesen auch berechtigt ist. Hierfür dient das bereits erfindungsgemäße Authentifizierungsverfahren.

In einem ersten Schritt 300 steckt der Anwender 56 seinen Hardware-Dongle 54 in das Sensorterminal 52 ein. Beim Einstecken dieses Hardware-Dongle 54 wird in einem darauffolgenden Schritt 302 ein Konfigurationsbefehl an das Sensorterminal 52 gesandt. Das Sensorterminal 52 wartet im Schritt 304 auf einen solchen Konfigurationsbefehl. Sobald dieser Konfigurationsbefehl eingegangen ist, sendet im Schritt 306 das Sensorterminal 52 eine Authentisierungsanfrage an den Durchflusssensor 50. Im Schritt 308 wird im Durchflusssensor 50 eine RTOTP-Anfrage erzeugt und das Sensorterminal 52 angefragt. Im Sensorterminal 52 wird auf diese Anfrage im Schritt 310 gewartet. Bei der RTOTP-Anfrage vom Durchflusssensor 50 zum Sensorterminal 52 wird eine im Durchflusssensor 50 bereitgestellte vorgebbare Information R, die beispielsweise als Zufallswert generiert oder aus einer zuvor abgelegten Liste von Werten abgeleitet sein kann, dem Sensorterminal 52 mitgeteilt. Im Schritt 310 erfährt also das Sensorterminal 52 die vorgebbare Information R für die spätere Berechnung eines zugehörenden Hash-Wertes bzw. trunkierten Hash-Wertes. Im darauffolgenden Schritt 312 stellt das Sensorterminal 52 eine RTOTP-Anfrage an den Hardware-Dongle 54, bei dem als fiktiver Zeitstempel die vorgebbare Information R dem TOTP-Generator im Hardware-Dongle 54 zur Verfügung gestellt wird.

Um das Authentifizierungsverfahren noch sicherer zu gestalten, wird gemäß Fig. 3 eine zusätzliche Authentisierung beim Hardware-Dongle durchgeführt. Hierfür muss sich der Anwender 56 bei dem Hardware-Dongle mit einer PIN-Eingabe als berechtigte Person identifizieren. Dies erfolgt im Schritt 314. Der Anwender wird aufgefordert, eine PIN einzugeben. Anstelle einer solchen PIN-Eingabe kann auch das Einstecken einer Smart-Card, das Auflegen eines Fingers auf einen geeigneten Fingerprintsensor oder Ähnliches erforderlich sein. Im Schritt 316 gibt der Anwender 56 eine PIN ein. Im Hardware-Dongle 54 wird auf diese Eingabe im Schritt 318 gewartet. Sobald die PIN-Eingabe durch den Anwender 56 erfolgt ist, wird im Schritt 320 überprüft, ob die PIN-Eingabe korrekt war oder nicht. Ist die PIN-Eingabe nicht korrekt gewesen, erfolgt im Schritt 322 eine Fehlermeldung, die vom Hardware-Dongle 54 an das Sensorterminal 52 übertragen wird. Ist dagegen die PIN-Eingabe im Schritt 320 korrekt gewesen, erfolgt im Schritt 324 eine Berechnung des trunkierten Hash-Wertes R'TOTP. Dieser Wert wird im Schritt 324 an das Sensorterminal 52 übertragen. Dort wird im Schritt 326 auf die R'TOTP-Antwort gewartet.

Das Sensorterminal 52 stellt im Schritt 328 fest, ob zuvor im Schritt 326 eine Fehlermeldung oder eine R'TOTP-Antwort eingegangen ist. Ist eine Fehlermeldung eingegangen, erfolgt in einem darauffolgenden Schritt 330 eine Fehlermeldung und ein Konfigurieren beziehungsweise ein Auslesen des Durchflusssensors 50 wird blockiert.

Ist dagegen im Schritt 328 erkannt worden, dass keine Fehlermeldung vorliegt, sondern eine R'TOTP-Antwort eingegangen ist, so wird in einem darauffolgenden Schritt 332 diese R'TOTP-Antwort an den Durchflusssensor 50 gesendet. Im Durchflusssensor 50 hat zuvor in einem internen Rechenschritt 309 eine interne Berechnung eines eigenen trunkierten Hash-Wertes RTOTP stattgefunden. Hierfür wird ein herkömmlicher TOTP-Generator im Durchflusssensor 50 eingesetzt, dem anstelle eines Zeitstempels genau diejenige vorgebbare Information R zur Verfügung gestellt wird, die zuvor im Schritt 308 auch an das Sensorterminal 52 gesandt wurde. Im TOTP-Generator des Durchflusssensors 50 wird hieraus ein trunkierter Hash-Wert RTOTP berechnet. Im Schritt 334 wird auf die R'TOTP-Antwort des Sensorterminals 52 gewartet. Sobald eine solche R'TOTP-Antwort vom Sensorterminal 52 beim Durchflusssensor 50 eingeht, wird dort im Schritt 336 die R'TOTP-Antwort des Sensorterminals 53 mit dem berechneten RTOTP-Wert gemäß Schritt 309 im Durchflusssensor 50 verglichen. Dieser Vergleich findet im Schritt 336 statt. Anschließend erfolgt im Schritt 338 eine Entscheidung, ob der Vergleich der beiden Werte korrekt war oder nicht. Ergibt der Vergleich in Schritt 338, dass die beiden Werte nicht korrekt sind, wird im Schritt 340 ein Fehler an das Sensorterminal 52 gesandt. Im Schritt 342 wartet hierfür das Sensorterminal 52 auf eine Antwort vom Durchflusssensor 50. Ist dagegen der Vergleich positiv, das heißt, dass die Werte R'TOTP, berechnet im Sensorterminal 52, und RTOTP, berechnet im Durchflusssensor 50, identisch sind, so wird im Schritt 344 an das Sensorterminal 52 eine Bestätigung der Authentifizierung, das heißt eine korrekte Authentifizierung, mitgeteilt.

Im Sensorterminal 52 wird abhängig von dem Vergleichsergebnis im Schritt 338 entschieden, ob die Authentifizierung erfolgreich war oder nicht. Dies erfolgt im Schritt 346. War die Authentifizierung der trunkierten Hash-Werte R'TOTP und RTOTP nicht erfolgreich, wird ein Fehler angezeigt und auf den Schritt 330 gesprungen. War die Authentifizierung der trunkierten Hash-Werte jedoch erfolgreich, wird im Schritt 348 ein Konfigurationsbefehl an den Durchflusssensor 50 gesandt, der im Schritt 350 hierauf wartet. Im Schritt 352 wird im Durchflusssensor 50 der Konfigurationsbefehl ausgelöst und gegebenenfalls signalisiert, dass eine positive Authentifizierung erfolgt ist. Ist dies der Fall, kann der Anwender 56 den Durchflusssensor 50 auslesen, konfigurieren, mit einem neuen Update versehen, parametrieren und so weiter.

Wenngleich im Zusammenhang mit Figur 3 und den Schritten 314 bis 320 auch eine PIN-Eingabe und damit eine zusätzliche Authentisierung des Anwenders beim Hardware-Dongle erfolgt, ist eine solche PIN-Eingabe lediglich optional. Es kann das beschriebene Verfahren ohne eine solche PIN-Eingabe erfolgen. Allerdings ist die Authentifizierung dann weniger sicher, insbesondere kann eine erfolgreiche Authentisierung mit einem entwendeten Hardware-Dongle nicht unterbunden werden.

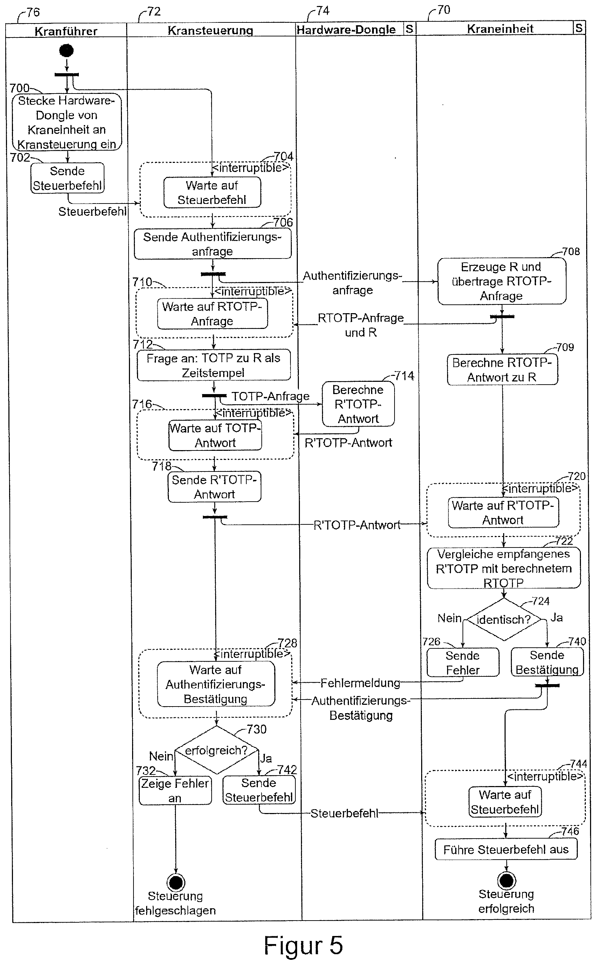

In einem zweiten Ausführungsbeispiel, das in den Figuren 4 und 5 illustriert ist, wird eine Kransteuerung 72 einer Kraneinheit 70 (beispielsweise einer Verladebrücke oder eines Gittermastkrans) vorgestellt. Dabei wird wiederum das erfindungsgemäße Verfahren zur Authentifizierung angewandt.

Folgende Bedingungen sollen in diesem Ausführungsbeispiel gelten. Die Steuerung der Kraneinheit 70 erfolgt per Funk. Es darf nur geschultes und berechtigtes Personal zum Aufbewahrungsort einer Fernbedienung der Kransteuerung 72 Zugang haben. Nur dieses berechtigte Personal hat auch Zugriff auf den zur Kraneinheit 70 gehörenden Hardware-Dongle 74. Voraussetzungsgemäß ist, dass in der Kraneinheit 70 und im Hardware-Dongle 74 ein gemeinsames Shared-Secret S gespeichert ist.

Üblicherweise erfolgt eine Anmeldung eines Bedieners immer mit einer Interaktion zwischen Mensch und Maschine. Dies ist häufig fehleranfällig oder wird vom Menschen unsicher umgesetzt. So erfolgt zum Beispiel keine Abmeldung am System, wenn eine Bedienung für eine kurze Zeit unterbrochen wird. Ähnlich wie an einem Windows-PC, an dem man beim Verlassen des Arbeitsplatzes eine Bildschirmsperre aktiviert, kann durch eine einfach zu verwendende Authentifizierungsmaßnahme die Cyber Security im Betrieb einer Kraneinheit, die ein Embedded-Umfeld darstellt, deutlich erhöht werden.

Auch kann das Risiko eines funkbasierten Authentifizierungsangriffs auf die Steuerung der Kraneinheit 70 durch einen zweiten Authentifizierungsfaktor stark reduziert werden, da keine statischen Authentifizierungsdaten verwendet werden.

Im vorliegenden Bespiel erfolgt keine Anmeldung des Kranführers 76 an der Fernbedienung der Kransteuerung 70. Vielmehr authentifiziert sich die Fernbedienung über das erfindungsgemäße Verfahren an der Kraneinheit 70. Hierfür hat der Kranführer 76 Zugriff auf die Fernbedienung und steckt einen für die jeweilige Kraneinheit 70 konfigurierten Hardware-Dongle 74 in die Fernbedienung der Kransteuerung 72 ein. Die Fernbedienung baut über das erfindungsgemäße Verfahren eine Verbindung zur Kraneinheit 70 auf. Nur wenn das Shared-Secret S auf beiden Seiten bekannt ist und somit die RTOTP-Antwort auf beiden Seiten identisch berechnet wird, kann eine Anmeldung der Fernbedienung der Kransteuerung 70 und somit eine Steuerung der Kraneinheit erfolgen. Die Berechnung der RTOTP-Antwort erfolgt dabei auf Seiten der Fernbedienung im Hardware-Dongle 74, das in die Fernbedienung eingesteckt werden muss. Entsprechend ist keine feste Zuweisung einer bestimmten Fernbedienung an eine Kraneinheit 70 notwendig. Auch ist ein Abhandenkommen bzw. Diebstahl der Fernbedienung kein kritischer Vorfall mehr, da keinerlei Authentifizierungsdaten zur Anmeldung an einer Kraneinheit 70 in der Fernbedienung vorhanden sind und somit keine böswillige Steuerung einer Kraneinheit mehr möglich ist. Allerdings muss auf den Hardware-Dongle 74 geachtet bzw. dessen Verlust vermieden werden.

Über eine sequenzielle Prüfung der weiteren Verfügbarkeit des Hardware-Dongles 74 an der Fernbedienung kann zudem gewährleistet werden, dass eine Kransteuerung nur möglich ist, wenn der Hardware-Dongle 74 in die Fernbedienung gesteckt ist. Wird der Hardware-Dongle 74 entfernt, erfolgt vorzugsweise automatisiert eine Abmeldung der Fernsteuerung von der Kraneinheit 70. Legt der Kranführer 76 beispielsweise eine Pause ein, nimmt er den Hardware-Dongle 74 mit. Eine unberechtigte Bedienung der Kraneinheit 70 ist somit, auch bei ungeschütztem Zugriff auf die Fernbedienung der Kransteuerung 72, nicht mehr möglich.

In Figur 5 ist das Ablaufdiagramm einer Authentifizierung eines Kranführers 76 an einer Kraneinheit 70 im zeitlichen Verlauf dargestellt. Der Kranführer 76 soll dabei die Kraneinheit 70 über eine Kransteuerung 72 steuern. Die Kransteuerung 72 ist mit einem Hardware-Dongle 74 ausgestattet, der einen physikalischen und physischen Berechtigungsschlüssel für einen berechtigten Kranführer 76 darstellt. Im Hardware-Dongle 74 ist ein TOTP-Modul in Form eines TOTP-Generators integriert. Zusätzlich ist in dem Hardware-Dongle 74 ein Shared-Secret S gespeichert. Dieses Shared-Secret S ist auch in der Kraneinheit 70 gespeichert. In der Kraneinheit 70 ist auch ein TOTP-Generator integriert. Der Funktionsablauf, mit dem sich die Kransteuerung 72 legitimiert, um die Kraneinheit 70 bedienen zu dürfen, ist wie folgt:
Der Kranführer 76 steckt im Schritt 700 den Hardware-Dongle der Kransteuerung 72 an die Kransteuerung 72, z. B. die dafür vorgesehene Fernbedienung, ein. Darauf sendet im Schritt 702, der Kranführer 76 einen Steuerbefehl an die Kransteuerung 72. Im Schritt 704 wartet die Kransteuerung 72 auf einen solchen Steuerbefehl. Im darauffolgenden Schritt 706 sendet die Kransteuerung 72 eine Authentifizierungsanfrage an die Kraneinheit 70. Dort wird im Schritt 708 eine sogenannte RTOTP-Anfrage erzeugt, indem eine vorgegebene Information R, die beispielsweise zufällig generiert oder aus einer Liste von Werten entnommen werden kann, bereitgestellt wird. Diese vorgebbare Information R wird in Form einer RTOTP-Anfrage an die Kransteuerung 72 zurückübertragen, welche hierauf im Schritt 710 wartet. Im Schritt 712 wird in der Kransteuerung 72 aus dieser Anfrage und der übertragenen vorgebbaren Information R eine Anfrage erzeugt, welche als RTOTP-Anfrage an den Hardware-Dongle 74 gesandt wird. Im Schritt 714 wird im Hardware-Dongle 74 dann unter Verwendung der vorgebbaren Information R im dortigen TOTP-Generator eine R'TOTP-Antwort erzeugt und an die Kransteuerung 72 gesandt, die im Schritt 760 auf eine solche Antwort wartet. Im darauffolgenden Schritt 718 sendet die Kransteuerung 72 diese R'TOTP-Antwort, das heißt einen trunkierten Hash-Wert, an die Kraneinheit 70. Die Kraneinheit 70 wartet im Schritt 720 auf eine solche Antwort von der Kransteuerung 72. Zuvor ist in der Kraneinheit 70 in dem dortigen TOTP-Generator unter Verwendung der erwähnten vorgebbaren Information R im Schritt 709 eine RTOTP-Antwort errechnet worden. Dabei handelt es sich wiederum um einen trunkierten Hash-Wert. Im Schritt 722 erfolgt ein Vergleich des Wertes RTOTP der Kraneinheit 70 und des empfangenen Wertes R'TOTP der Kransteuerung 72 beziehungsweise des dort angeschlossenen Hardware-Dongles 74. Im Schritt 724 wird das Ergebnis des Vergleichs aus Schritt 722 ermittelt. Ergibt der Vergleich kein übereinstimmendes Ergebnis, wird im Schritt 726 ein Fehler an die Kransteuerung 52 gesendet, die im Schritt 728 auf eine Antwort der Kraneinheit 70 wartet. Zugleich wird im Schritt 730 auf ein Ergebnis der Authentifizierung gewartet und im Schritt 732 ein Fehler angezeigt, der signalisiert, dass der Vergleich zwischen den trunkierten Hash-Werten R'TOTP und RTOTP ein negatives Ergebnis brachte. Eine Steuerung der Kraneinheit 70 ist fehlgeschlagen und ist blockiert. Eine entsprechende Anzeige kann im Schritt 732 erfolgen.

Ergibt dagegen der Vergleich im Schritt 722 eine Übereinstimmung, so wird bei dem Vergleich im Schritt 724 ein positives Ergebnis signalisiert. Im Schritt 740 wird eine Bestätigung gesendet, dass der Vergleich von R'TOTP und RTOTP ein übereinstimmendes Ergebnis brachte. Dieses positive Ergebnis im Schritt 740 wird einerseits der Kransteuerung 72 mitgeteilt, welche im Schritt 730 eine erfolgreiche Authentifizierung erkennt und im Schritt 742 einen Steuerbefehl an die Kraneinheit 70 sendet. Im Schritt 744 wartet die Kraneinheit 70 auf einen solchen Steuerbefehl. Im Schritt 746 führt die Kraneinheit 70 dann den vom Anwender 76 gewünschten Steuerbefehl aus.

Im Gegensatz zum Ausführungsbeispiel von Figur 3 findet in der Kransteuerung von Figur 5 keine zusätzliche Authentisierung des Anwenders beim Hardware-Dongle statt. Eine zuvor erfolgreich durchgeführte PIN-Eingabe ist im Ausführungsbeispiel von Figur 5 nicht vorgesehen, kann jedoch auch hier vorgesehen werden.

### Bezugszeichenliste

- 1: **OCRA-Generator**
- 2: **OCRA-Generator**
- 10: anfragendes Gerät
- 12: TOTP-Generator
- 30: beglaubigendes Gerät
- 32: TOTP-Generator
- 50: Durchflusssensor
- 52: Terminal
- 54: Hardware-Dongle
- 56: Anwender
- 70: Kraneinheit
- 72: Kransteuerung
- 74: Hardware-Dongle
- 76: Bediener, Kranführer
- S: Shared-Secret
- Z: Zugangsdaten
- R: Vorgebbare Informationen, Zufallswert
- OCRA: OCRA-Antwort im beglaubigenden Gerät 30
- O'CRA: O'CRA-Antwrot im anfragenden Gerät 10
- RTOTP: Hash-Wert im beglaubigenden Gerät 30,
- R'TOTP: Hash-Wert im anfragenden Gerät 10,
- ( 1a )-: ( 10 ) Schritte
- 300-352: Schritte
- 700-746: Schritte

## Patentansprüche

1. Verfahren zur von einer Systemzeit unabhängigen Authentifizierung von Interaktionen in Microcontroller- und/oder FPGA- basierenden Geräten oder Vorrichtungen, insbesondere eingebetteten Systemen und/oder Flammenwächtern, bei welchen jeweils in einem anfragenden Gerät (10) und in einem beglaubigenden Gerät (30) ein kryptographischer, Hash-Wert (R'TOTP, RTOTP) nach Maßgabe eines von beiden Geräten (10, 30) benutzten, gemeinsamen Shared-Secrets (S) und einem in beiden Geräten (10, 30) in einem nach dem TOTP-Verfahren arbeitenden TOTP-Modul (12, 32) errechnet wird, wobei den TOTP-Modulen (12, 32) anstelle einer Systemzeit eine vorgebbare Information (R) zur Berechnung des jeweiligen Hash-Wertes (R'TOTP, RTOTP) zugeführt wird, derart, dass die vorgebbare Information (R) vom beglaubigenden Gerät (30) erzeugt oder bereitgestellt und bei einer Anfrage des anfragenden Gerätes (10) oder einer Direkteingabe an das beglaubigende Gerät (30) dem anfragenden Gerät (10) übermittelt wird, wo sie dann dem dortigen TOTP-Modul (12) zur Berechnung eines Hash-Wertes zugeführt und der dann dort errechnete Hash-Wert (R'TOTP) zu dem beglaubigenden Gerät (30) übertragen wird, und dass bei einer Übereinstimmung dieses vom beglaubigenden Gerät (30) empfangenen Hash-Wertes (R'TOTP) mit einem im beglaubigenden Gerät (30) mit der vorgegebenen Information (R) errechneten Hash-Wert (RTOTP) eine erfolgreiche Authentifizierung durchgeführt ist und die Interaktion freigeben und andernfalls bei einer Nichtübereinstimmung gesperrt wird.

2. Verfahren nach Anspruch 1,
**dadurch gekennzeichnet, dass** als das dem anfragenden Gerät (10) zugeordnete TOTP-Modul (12) ein in das anfragende Gerät (10) extern steckbarer Hardware-Dongle eingesetzt wird.

3. Verfahren nach Anspruch 1 oder 2,
**dadurch gekennzeichnet, dass** der Hash-Wert (R'TOTP, RTOTP) als trunkierter Hash-Wert bereitgestellt wird.

4. Verfahren nach Anspruch 1,
**dadurch gekennzeichnet, dass** zumindest eines der TOTP-Module (12, 32) als Softwareimplementierung unmittelbar im anfragenden Gerät (10) und/oder beglaubigenden Gerät (30) realisiert ist.

5. Verfahren nach Anspruch 1,
**dadurch gekennzeichnet, dass** zur Realisierung einer 2FA eine Vorab-Authentifizierungsanfrage mit vorgegebenen Zugangsdaten (Z) vom anfragenden Gerät (10) an das beglaubigende Gerät (30) gestellt oder dort direkt eingegeben wird und bei einer hierzu erfolgreichen Validitätsprüfung eine Authentifizierungsanfrage ermöglicht wird.

6. Verfahren nach Anspruch 5,
**dadurch gekennzeichnet, dass** als Zugangsdaten (Z) ein Passwort und/oder ein Nutzername und/oder ein Zertifikat verwendet werden.

7. Verfahren nach Anspruch 5,
**dadurch gekennzeichnet, dass** die Zugangsdaten (Z) auf einer drahtlos oder drahtgebunden arbeitenden Chipeinheit, insbesondere einer Smartcard oder einem USB-Modul, gespeichert sind.

8. Verfahren nach einem der Ansprüche 1 bis 7,
**dadurch gekennzeichnet, dass** die vorgebbare Information (R) ein Zufallswert ist, der vom beglaubigenden Gerät 30 erzeugt oder aus einer vorgegebenen Liste von Werten ausgewählt wird.

9. Verfahren nach einem der Ansprüche 1 bis 7,
**dadurch gekennzeichnet, dass** ein und dasselbe Shared-Secret (S) zur Authentifizierung von mehreren anfragenden Geräten (10) verwendet wird.

10. Verfahren nach einem der Ansprüche 1 bis 9,
**dadurch gekennzeichnet, dass** Interaktionen in auf Microcontroller und/oder FPGA's basierenden Geräten oder Einrichtungen, wie beispielsweise Flammenwächtern, Konfigurations-, Update-, Parametrierungs-, Mess-, Bedien-, Schalt-, Überwachungs- und/oder Steuerungsfunktionen in Industrieanlagen sind.

11. Verfahren nach einem der Ansprüche 1 bis 10,
**dadurch gekennzeichnet, dass** das Verfahren in einem Microcontroller und/oder einem FPGA eines Flammenwächters durchgeführt wird.

12. Microcontroller- und/oder FPGA- basierende Vorrichtung zur von einer Systemzeit unabhängigen Authentifizierung von Interaktionen, bei welcher jeweils in einem anfragenden Gerät (10) und in einem beglaubigenden Gerät (30) ein kryptographischer, Hash-Wert (R'TOTP, RTOTP) nach Maßgabe eines von beiden Geräten (10, 30) benutzten, gemeinsamen Shared-Secrets (S) und einem in beiden Geräten (10, 30) in einem nach dem TOTP-Verfahren arbeitenden TOTP-Modul (12, 32) errechenbar ist, wobei den TOTP-Modulen (12, 32) anstelle einer Systemzeit eine vorgebbare Information (R) zur Berechnung des jeweiligen Hash-Wertes (R'TOTP, RTOTP) zuführbar ist, derart, dass die vorgebbare Information (R) vom beglaubigenden Gerät (30) erzeugbar oder bereitstellbar und bei einer Anfrage des anfragenden Gerätes (10) dem anfragenden Gerät (10) übermittelbar ist, wo sie dann dem dortigen TOTP-Modul (12) zur Berechnung eines Hash-Wertes zuführbar und der dort errechnete Hash-Wert (R'TOTP ) zu dem beglaubigenden Gerät (30) übertragbar ist, und dass bei einer Übereinstimmung dieses vom beglaubigenden Gerät (30) empfangbaren Hash-Wertes (R'TOTP ) mit einem im beglaubigenden Gerät (30) mit der vorgebbaren Information (R) errechneten Hash-Wertes (RTOTP ) eine erfolgreiche Authentifizierung durchführbar ist und die Interaktion freigebbar und andernfalls bei einer Nichtübereinstimmung sperrbar ist.

13. Vorrichtung nach Anspruch 12,
**dadurch gekennzeichnet, dass** die Vorrichtung ein eingebettetes System ist.

14. Flammenwächter
**gekennzeichnet durch** eine Vorrichtung nach einem der Ansprüche 12 oder 13, insbesondere **dadur ch gekennzeichnet**, dass dieser eine Microcontroller- und/oder FPGA- basierende Vorrichtung gemäß einem der Ansprüche 12 oder 13 zur von einer Systemzeit unabhängigen Authentifizierung von Interaktionen aufweist.

## Claims

1. Method for a system time independent authentication of interactions in microcontroller-based and/or FPGA-based devices or systems, in particular embedded systems and/or flame monitors, in which, in each one of a requesting device (10) and an authenticating device (30), a cryptographic hash-value (R'TOTP, RTOTP) is calculated in accordance with one of mutually shared secrets (S) used by both devices (10, 30) and in a TOTP module (12, 32) operating in accordance with a TOTP method in both devices (10, 30), wherein, instead of a system time, a specifiable information (R) is provided to the TOTP modules (12, 32) for calculating the respective hash value (R'TOTP, RTOTP), such that the specifiable information (R) is generated or provided by the authenticating device (30) and, upon request of the requesting device (10) or by means of a direct input into the authenticating device (30), is transferred to the requesting device (10), where it is then provided to the TOTP module operating there for calculating a hash value and the hash value (R'TOTP) calculated there is transmitted to the authenticating device (30), and in that, if this hash value (R'TOTP) received from the authenticating device (30) matches the hash value (RTOTP) calculated in the authenticating device (30) using the specified information (R), a successful authentication is carried out and the interaction is allowed which, if there is no match, will otherwise be blocked.

2. Method in accordance with claim 1,
**characterized in that** a hardware dongle, which can be externally plugged into the requesting device (10), is employed as the TOTP module (12) assigned to the receiving device (10).

3. Method in accordance with claim 1 or 2,
**characterized in that** the hash value (R'TOTP, RTOTP) is provided as a truncated hash value.

4. Method in accordance with claim 1,
**characterized in that** at least one of the TOTP modules (12, 32) is realized as a software implementation directly in the requesting device (10) and/or the authenticating device (30).

5. Method in accordance with claim 1,
**characterized in that**, for the realization of a 2FA, a preliminary authentication request having specified access data (Z) is sent from the requesting device (10) to the authenticating device (30), or is directly input into it, allowing, in the case of a successful validity test, an authentication request.

6. Method in accordance with claim 5,
**characterized in that** a password and/or a user name and/or a certificate is (are) used as access data.

7. Method in accordance with claim 5,
**characterized in that** the access data (Z) are stored on a chip unit which operates wirelessly or wire-based, in particular, on a smart card or a USB module.

8. Method in accordance with any of claims 1 to 7,
**characterized in that** the specifiable information (R) is a random value which is generated by the authenticating device (30) or is selected from a specified list of values.

9. Method in accordance with any of claims 1 to 7,
**characterized in that** one and the same shared secret (S) is used by numerous requesting devices (10) for authentication.

10. Method in accordance with any of claims 1 to 9,
**characterized in that** interactions in devices or systems based on microcontrollers and/or FPGAs such as, for example, flame monitors, are configuration, update, parameterization, measurement, service, switching, monitoring and/or control functions in industrial installations.

11. Method in accordance with any of claims 1 to 10,
**characterized in that** the method is carried out in a microcontroller and/or an FPGA of a flame monitor.

12. Microcontroller and/or FPGA based device for a system time independent authentication of interactions in microcontroller-based and/or FPGA-based devices or systems, in particular embedded systems and/or flame monitors, in which, in each one of a requesting device (10) and an authenticating device (30), a cryptographic hash-value (R'TOTP, RTOTP) can be calculated in accordance with one of mutually shared secrets (S) used by both devices (10, 30) and in a TOTP module (12, 32) operating in accordance with a TOTP method in both devices (10, 30), wherein, instead of a system time, a specifiable information (R) can be provided to the TOTP modules (12, 32) for calculating the respective hash value (R'TOTP, RTOTP), such that the specifiable information (R) can be generated or provided by the authenticating device (30) and, upon request of the requesting device (10) or by means of a direct input into the authenticating device (30), can be transferred to the requesting device (10), where it then can be provided to the TOTP module operating there for calculating a hash value and the hash value (R'TOTP) calculated there can be transmitted to the authenticating device (30), and in that, if this hash value (R'TOTP) received from the authenticating device (30) matches the hash value (RTOTP) calculated in the authenticating device (30) using the specified information (R), a successful authentication can be carried out and the interaction can be allowed which, if there is no match, can otherwise be blocked.

13. Device in accordance with claim 12,
**characterized in that** the device is an embedded system.

14. Flame monitor
**characterized by** a device in accordance with either of claims 12 or 13, in particular **characterized in that** it comprises a microcontroller and/or FPGA based system in accordance with either of claims 12 or 13 for a system time independent authentication of interactions.

## Revendications

1. Procédé d'authentification indépendante du temps-système d'interactions dans des appareils ou dispositifs à microcontrôleur et/ou circuit intégré logique simple FPGA, notamment de systèmes intégrés et/ou de contrôleurs de flamme, selon lequel,
- on calcule dans un appareil certificateur (30), une valeur hachée (R'TOTP), RTOTP) cryptographique selon les indications d'un secret partagé (S), commun, utilisé par les deux appareils (10, 30) et dans un module TOTP (12, 32) dans les deux appareils (10, 30) appliquant le procédé TOTP,
- on applique aux modules TOTP (12, 32), à la place d'un temps-système, une information prédéfinie (R) pour calculer la valeur hachée (R'TOTP, RTOTP) respective de façon que l'information prédéfinie (R) générée ou fournie par l'appareil certificateur (30) pour une requête de l'appareil demandeur (10) ou une entrée directe appliquée à l'appareil demandeur (30), est transmise à l'appareil demandeur (10), pour y être alors appliquée au module TOTP (12), de cet endroit pour calculer une valeur hachée et la valeur hachée (R' TOTP) ainsi calculée localement est transmise à l'appareil certificateur (30), et
- s'il y a concordance entre cette valeur hachée (R'TOTP) reçue par l'appareil certificateur (30) et une valeur hachée (RTOTP) calculée dans l'appareil certificateur (30) avec l'information prédéfinie (R), l'authentification sera réussie et l'interaction sera libérée, et dans le cas contraire, il y a blocage s'il n'y a pas concordance.

2. Procédé selon la revendication 1,
**caractérisé en ce que**
le module TOTP (12) associé à l'appareil demandeur (10) est installé comme dongle sur l'appareil demandeur (10) comme circuit externe affichable.

3. Procédé selon la revendication 1 ou 2,
**caractérisé en ce que**
la valeur hachée (R'TOTP, RTOTP) est fournie comme valeur hachée tronquée.

4. Procédé selon la revendication 1,
**caractérisé en ce que**
au moins l'un des modules TOTP (12, 32) est réalisé comme implémentation par programme, directement dans l'appareil demandeur (10) et/ou dans l'appareil certificateur (30).

5. Procédé selon la revendication 1,
**caractérisé en ce que**
pour une double authentification 2FA, on applique une requête d'authentification préalable avec des données d'accès prédéfinies (Z) de l'appareil demandeur (10) à l'appareil certificateur (30) ou encore on les introduit directement et si le contrôle de validité effectué à cet effet est réussi, la demande d'authentification est possible.

6. Procédé selon la revendication 5,
**caractérisé en ce que**
comme données d'accès (Z), on utilise un mot de passe et/ou un nom d'utilisateur et/ou un certificat.

7. Procédé selon la revendication 5,
**caractérisé en ce que**
les données d'accès (Z) sont mémorisées sur une unité de puce fonctionnant sans fil ou à liaison par fil, notamment une carte à puce ou un module USB.

8. Procédé selon l'une des revendications 1 à 7,
**caractérisé en ce que**
l'information prédéfinie (R) est une valeur aléatoire générée par l'appareil certificateur (30) ou sélectionnée parmi les valeurs d'une liste prédéfinie.

9. Procédé selon l'une des revendications 1 à 7,
**caractérisé en ce que**
on utilise un seul et même code partagé (S) pour l'authentification de plusieurs appareils demandeurs (10).

10. Procédé selon l'une des revendications 1 à 9,
**caractérisé en ce que**
les interactions dans des appareils ou installations comportant un microcontrôleur et/ou un circuit intégré logique simple FPGA, sont, par exemple, des contrôleurs de flamme, des fonctions de configuration, de mise à jour, de paramétrage, de mesure, de service, de commutation, de surveillance et de commande dans des installations industrielles.

11. Procédé selon l'une des revendications 1 à 10,
**caractérisé en ce que**
le procédé est appliqué par un microcontrôleur et/ou un circuit intégré logique simple FPGA d'un contrôleur de flamme.

12. Dispositif à microcontrôleur et/ou FPGA pour des interactions d'authentification indépendantes du temps-système, dans lequel
- dans un appareil demandeur (10) et dans un appareil certificateur (30), on calcule une valeur hachée (R'TOTP, RTOTP) cryptographique en fonction de l'indication de secret partagé (S) commun par l'un des deux appareils (10, 30) et calculée dans l'un des deux appareils (10, 30) dans un module TOTP (12, 32) appliquant le procédé TOTP,
- les modules TOTP (12, 32) recevant à la place d'un temps-système, une information prédéfinie (R) pour calculer la valeur hachée (R'TOTP, RTOTP) respective de façon que l'information prédéfinie (R) générée ou fournie par l'appareil certificateur (30) et la transmettre à l'appareil demandeur (10) en réponse à une requête de l'appareil demandeur (10), pour être alors fournie au module TOTP (12) local pour calculer une valeur hachée et cette valeur hachée (R'TOTP) calculée localement est transmise à l'appareil certificateur (30), et
en cas de concordance de cette valeur hachée (R'TOTP) reçue par l'appareil certificateur (30) et de la valeur hachée (R'TOTP) calculée avec l'information prédéfinie (R) par l'appareil calculateur (30), une authentification est réussie et l'interaction est libérée, et
dans le cas contraire, elle est bloquée en cas de non-concordance.

13. Dispositif selon la revendication 12,
**caractérisé en ce que**
le système est un système embarqué.

14. Contrôleur de flamme,
**caractérisé par**
un dispositif selon l'une des revendications 12 ou 13 notamment **caractérisé en ce que**
celui-ci comporte un dispositif à microcontrôleur et/ou circuit intégré logique simple FPGA selon l'une des revendications 12 ou 13 pour une authentification d'interaction, indépendante du temps-système.
